# EUROPEAN PATENT APPLICATION

(11) **EP 4 764 396 A1**
(43) Date of publication of application: **24.06.2026**
(21) Application number: 25783160.2
(22) Date of filing: 03.04.2025
(51) Int. Cl.: G01B 7/14, G01B 7/12

(54) **ROLLER SURFACE INSPECTION APPARATUS AND ROLLER SURFACE INSPECTION METHOD**

(30) Priority: 05.04.2024 KR 20240046671
(71) Applicant: LG Energy Solution, Ltd., Seoul 07335 (KR)
(72) Inventor: LIM, Dong Hun, Daejeon 34122 (KR); HWANG, Koo Youn, Daejeon 34122 (KR); CHA, Myeong Geun, Daejeon 34122 (KR); JEONG, Yun Hyeock, Daejeon 34122 (KR)
(74) Representative: Goddar, Heinz J.
(86) International application number: PCT/KR2025/004451
(87) International publication number: WO 2025/211801

(57) **Abstract**

The present disclosure relates to a roller surface inspection device and a roller surface inspection method. A roller surface inspection device according to the present disclosure inspects a surface condition of a roller in contact with a material sheet, wherein an outer circumferential surface of the roller includes a contact surface that contacts the material sheet along the longitudinal direction of the roller and a non-contact surface that does not contact the material sheet, wherein the roller surface inspection device includes a measurement sensor that measures gaps between the contact surface and the non-contact surface and the measurement sensor.

## Description

### TECHNICAL FIELD

### CROSS-REFERENCE TO RELATED APPLICATIONS

The present application is based on and claims priority from Korean Patent Application No. 10-2024-0046671, filed on April 5, 2024, with the Korean Intellectual Property Office, the disclosure of which is incorporated herein in its entirety by reference.

### TECHNICAL FIELD

The present disclosure relates to a roller surface inspection device and a roller surface inspection method.

### BACKGROUND ART

Secondary batteries have been applied to small-sized applications such as mobile devices or laptop computers, but recently, the research direction has been expanded to medium and large-sized applications, and they are widely used in applications requiring high voltage and large capacity in relation to energy storage systems (ESSs) or electric vehicles (EVs).

Such secondary batteries may be manufactured in a form in which an electrode assembly where electrodes and separators are alternately stacked is accommodated in a case or housing. At this time, the electrodes may have a form in which an electrode sheet coated with an electrode active material or the like is cut to a predetermined size or shape.

Such an electrode sheet is subjected to, for example, at least one pressing process. In general, the pressing of the electrode sheet is performed by pressing rollers. At this time, the gap between the pressing rollers may be used as basic data for controlling the operation of the pressing rollers. The gap may mean the narrowest gap (or space) formed between a pair of pressing rollers, and if the gap is excessively large, the electrode sheet may not be sufficiently pressed. This may cause various problems, such as the pressed electrode sheet not being manufactured uniformly or having defects. Here, the surface of the rollers in contact with the electrode sheet is worn out as the pressing rollers are used, and if the diameter is reduced due to wear or a part thereof is damaged to form a groove or the like, there is a problem that some or all of the contacting parts of the electrode sheet passing between a plurality of pressing rollers are not pressed.

Conventionally, it was not possible to standardize the replacement time by visually checking the surface condition of the roller in contact with the electrode sheet.

That is, when the wear condition of the roller was visually checked to be severe, the roughness of the corresponding roller was measured, and if the measured roughness value deviated from the initial roughness value or if there was a change in dimensions, the roller had to be replaced.

Therefore, there is a need for a technology that may check the surface wear condition of the roller every time before the operation of the equipment and then determine the replacement time.

### SUMMARY

### TECHNICAL PROBLEM

One aspect of the present disclosure is to provide a roller surface inspection device and a roller surface inspection method that facilitate inspection of the wear condition of a roller in contact with a material sheet.

### TECHNICAL SOLUTION

A roller surface inspection device according to an embodiment of the present disclosure inspects a surface condition of a roller in contact with a material sheet, wherein an outer circumferential surface of the roller includes a contact surface that contacts the material sheet along the longitudinal direction of the roller and a non-contact surface that does not contact the material sheet, wherein the roller surface inspection device includes a measurement sensor that measures gaps between the contact surface and the non-contact surface and the measurement sensor.

Meanwhile, a roller surface inspection method according to an embodiment of the present disclosure inspects a surface condition of a roller in contact with a material sheet, wherein an outer circumferential surface of the roller includes a contact surface that contacts the material sheet along the longitudinal direction of the roller and a non-contact surface that does not contact the material sheet, wherein the roller surface inspection method includes a measurement step of measuring the gaps between the contact surface and the non-contact surface and the measurement sensor by the measurement sensor.

### ADVANTAGEOUS EFFECTS

According to the present disclosure, by measuring each of the gaps between the contact surface in contact with the material sheet and the non-contact surface in no contact with the material sheet in the roller and the measurement sensor by the measurement sensor (110), it is possible to facilitate inspection of the wear condition of the roller, to standardize the time for checking the condition of the roller and replacement, and to facilitate judgment of the time for checking the condition of the roller and replacement.

### BRIEF DESCRIPTION OF THE DRAWINGS

FIG. 1 is a front view showing a roller surface inspection device according to an embodiment of the present disclosure.
FIG. 2 is a front view showing an exemplary roller applied to a roller surface inspection device according to an embodiment of the present disclosure.
FIG. 3 is a configuration view showing a roller surface inspection device according to an embodiment of the present disclosure.

### DETAILED DESCRIPTION

The objectives, specific advantages, and novel features of the present disclosure will become more apparent from the following detailed description and preferred embodiments in connection with the accompanying drawings. It should be noted that in affixing the reference numerals to the elements in each drawing in this specification, the identical reference numerals are affixed to the identical elements as much as possible even if they are shown in different drawings. Additionally, the present disclosure may be embodied in many different forms and is not limited to the embodiments described herein. And, in describing the present disclosure, detailed descriptions of related known technologies that may unnecessarily obscure the gist of the present disclosure will be omitted.

### Roller surface inspection device according to embodiment of the present disclosure

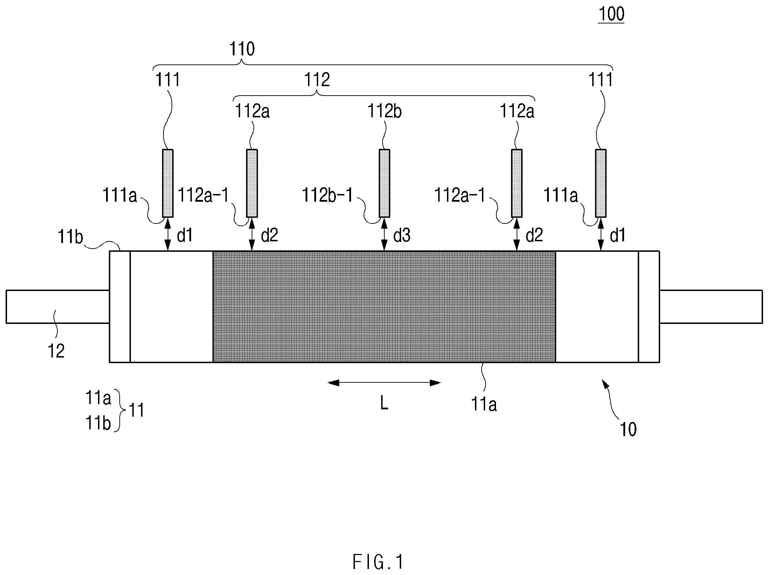

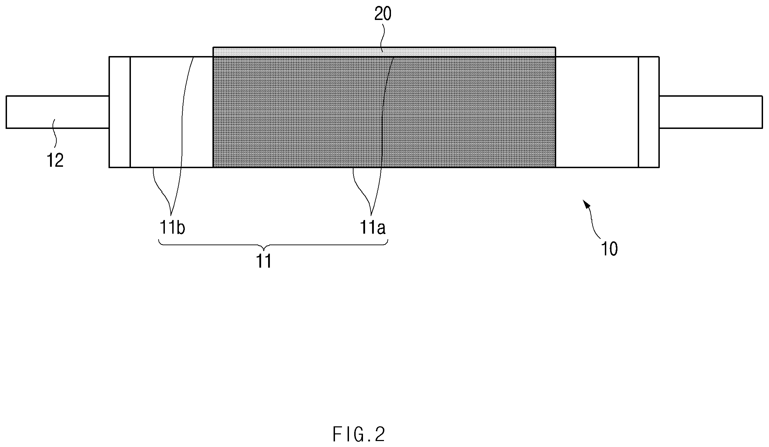

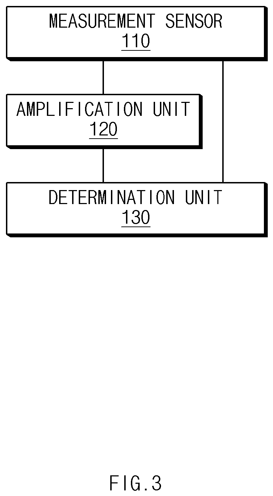

FIG. 1 is a front view showing a roller surface inspection device according to an embodiment of the present disclosure, FIG. 2 is a front view showing an exemplary roller applied to a roller surface inspection device according to an embodiment of the present disclosure, and FIG. 3 is a configuration view showing a roller surface inspection device according to an embodiment of the present disclosure.

Referring to FIGS. 1 to 3, a roller surface inspection device 100 according to an embodiment of the present disclosure inspects a surface condition of a roller 10 in contact with a material sheet 20, wherein an outer circumferential surface 11 of the roller 10 includes a contact surface 11a that contacts the material sheet 20 along the longitudinal direction L of the roller 10 and a non-contact surface 11b that does not contact the material sheet 20, wherein the roller surface inspection device 100 includes a measurement sensor 110 that measures the gaps between the contact surface 11a and the non-contact surface 11b and the measurement sensor 110. Additionally, the roller surface inspection device 100 according to an embodiment of the present disclosure may further include a determination unit 130 and an amplification unit 120.

More specifically, the roller surface inspection device 100 according to an embodiment of the present disclosure is a roller surface inspection device 100 that inspects the surface condition of the roller 10 in contact with the material sheet 20.

The material sheet 20 may be configured as a sheet-shaped electrode.

The roller 10 may extend in the longitudinal direction L in a cylindrical shape. Here, the outer circumferential surface 11 of the roller 10 may be made of a metal material. At this time, the roller 10 may be configured as a calendar roll. And, the roller 10 has a rotating shaft 12 extending in a direction of the central axis, so that the rotating shaft 12 rotates and the roller 10 may rotate.

Additionally, the outer circumferential surface 11 of the roller 10 includes a contact surface 11a that contacts the material sheet 20 along the longitudinal direction L of the roller 10 and a non-contact surface 11b that does not contact the material sheet 20.

Here, the contact surfaces 11a may be positioned on both sides of the roller 10 with respect to the longitudinal direction L of the roller 10, and the non-contact surface 11b may be positioned between the plurality of contact surfaces 11a positioned on both sides of the roller 10.

The measurement sensor 110 may measure each of the gaps between the measurement sensor 110 and the contact surface 11a and the non-contact surface 11b on the outer circumferential surface 11 of the roller 10. Here, the measurement sensor 110 may detect the wear condition of the contact surface 11a and the non-contact surface 11b by measuring the gaps d1, d2, d3 between the measurement sensor 110 and the outer circumferential surface 11 of the roller 10. The position of the measurement sensor 110 may be adjusted and fixed by fixing means. Here, the fixing means may include, for example, a fixing frame.

Additionally, the measurement sensor 110 may include a capacitive sensor. At this time, the measurement sensor 110 may transmit a capacitance signal, which is the measured value of the contact surface 11a and the non-contact surface 11b of the roller 10 to be measured, to the determination unit 130.

The capacitive sensor may be, for a specific example, a capacitive displacement sensor. The capacitive sensor may detect a change in capacitance to measure the gaps d1, d2, d3 between the measurement sensor 110, which is a capacitive sensor, and the outer circumferential surface 11 of the roller 10.

The capacitive sensor may include a non-contact surface sensor 111 that measures the capacitance of the non-contact surface 11b and a contact surface sensor 112 that measures the capacitance of the contact surface 11a.

The non-contact surface sensors 111 may be provided in plurality to sense the non-contact surfaces 11b positioned on both sides of the roller 10, respectively.

The contact surface sensors 112 may be provided in plurality along the longitudinal direction L of the roller 10 to measure the diameter of the roller 10 at a plurality of portions on the contact surface 11a.

Additionally, the contact surface sensor 112 may include a first contact surface sensor 112a that measures the capacitance of edge portions of the contact surface 11a with which the material sheet 20 is in contact with respect to the longitudinal direction L of the roller 10 and a second contact surface sensor 112b that measures the capacitance of a central portion of the contact surface 11a with which the material sheet 20 is in contact with respect to the longitudinal direction L of the roller 10.

The first contact surface sensor 112a may be provided in plurality to sense the edge portions of both sides of the contact surface 11a, respectively. And, the second contact surface sensor 112b may be positioned between the plurality of first contact surface sensors 112a.

The non-contact surface sensor 111 and the contact surface sensor 112 may transmit initial gap values obtained by measuring the gaps between the non-contact surface sensor 111 and the contact surface sensor 112 and the outer circumferential surface 11 of the roller 10 to the determination unit 130 before the operation of the equipment including the roller 10. That is, the initial gap value of the non-contact surface 11b measured by the non-contact surface sensor 111 and the initial gap value of the contact surface 11a measured by the contact surface sensor 112 may be transmitted to the determination unit 130.

Additionally, the non-contact surface sensor 111 and the contact surface sensor 112 may transmit measured gap values obtained by measuring the gaps d1, d2, d3 between the non-contact surface sensor 111 and the contact surface sensor 112 and the outer circumferential surface 11 of the roller 10 to the determination unit 130 after the operation of the equipment including the roller 10. Here, the non-contact surface sensor 111 and the contact surface sensor 112 may measure the gaps d1, d2, d3 between the non-contact surface sensor 111 and the contact surface sensor 112 and the outer circumferential surface 11 of the roller 10, for example, while rotating the roller 10 during measurement after the operation of the equipment.

At this time, as an example, the measured gap value measured while rotating the roller 10 in the determination unit 130 may be determined by using the average value. That is, the average value of the gap values transmitted from the measurement sensor 110 may be used as the measured gap value. Accordingly, it may be possible to detect changes in the diameters of the contact surface 11a and the non-contact surface 11b of the roller 10 in the determination unit 130. That is, it may be easy to determine whether the contact surface 11a and the non-contact surface 11b of the roller 10 are worn out and thus reduced in diameter.

Meanwhile, as another example, the measured gap value measured while rotating the roller 10 in the determination unit 130 may be determined by using a value that is equal to or greater than a predetermined range. That is, a value that is equal to or greater than a predetermined range in the gap values transmitted from the measurement sensor 110 may be used as the measured gap value. Accordingly, it is possible to easily detect that some parts of the contact surface 11a and the non-contact surface 11b of the roller 10 are damaged to form a groove or the like in the determination unit 130.

The determination unit 130 may receive the measured values of the contact surface 11a and the non-contact surface 11b of the roller 10 measured by the measurement sensor 110 and determine that the condition of the roller 10 needs to be checked and the roller 10 needs to be replaced.

Additionally, the determination unit 130 may determine that the condition of the roller 10 needs to be checked when the difference between the measured value of the contact surface 11a and the measured value of the non-contact surface 11b is equal to or greater than a certain value. At this time, the determination unit 130 may determine that the condition of the roller 10 needs to be checked when the difference between the measured value of the contact surface 11a and the measured value of the non-contact surface 11b is equal to or greater than, for example, 2%.

Here, the determination unit 130 may determine that the condition of the roller 10 needs to be checked, for example, when the amplitude difference between the capacitance signal waveform of the contact surface 11a and the capacitance signal waveform of the non-contact surface 11b is equal to or greater than a certain value. At this time, the determination unit 130 may determine that the condition of the roller 10 needs to be checked when the amplitude difference between the capacitance signal waveform of the contact surface 11a and the capacitance signal waveform of the non-contact surface 11b is equal to or greater than, for example, 2%.

In addition, the determination unit 130 may compare the initial gap value measured before the operation of the equipment with the measured gap value measured after the operation of the equipment by the non-contact surface sensor 111 and the contact surface sensor 112, and may determine that the roller 10 needs to be replaced if the difference is equal to or greater than a certain range. At this time, the determination unit 130 may compare the initial gap value measured before the operation of the equipment with the measured gap value measured after the operation of the equipment by the non-contact surface sensor 111 and the contact surface sensor 112, and may determine that the roller 10 needs to be replaced if the difference is equal to or greater than, for example, 3%.

The amplification unit 120 may be connected to the measurement sensor 110 to amplify the measured values of the contact surface 11a and the non-contact surface 11b and transmit them to the determination unit 130. At this time, the amplification unit 120 may be connected to the measurement sensor 110 to amplify, for example, the capacitance signal of the contact surface 11a and the capacitance signal of the non-contact surface 11b and transmit them to the determination unit 130.

Accordingly, by amplifying the measured values of the contact surface 11a and the non-contact surface 11b through the amplification unit 120, the determination unit 130 may more accurately determine the condition of the roller 10.

The roller surface inspection device 100 according to an embodiment of the present disclosure, configured as described above, measures each of the gaps between the contact surface 11a in contact with the material sheet 20 and the non-contact surface 11b in no contact with the material sheet 20 in the roller 10 and the measurement sensor 110 by the measurement sensor 110, which may have effects of facilitating inspection of the wear condition of the roller 10, standardizing the time for checking the condition of the roller 10 and replacement, and facilitating judgment of the time for checking the condition of the roller 10 and replacement.

### Roller surface inspection method according to embodiment of the present disclosure

Hereinafter, a roller surface inspection method according to an embodiment of the present disclosure will be described.

Referring to FIGS. 1 to 3, a roller surface inspection method according to an embodiment of the present disclosure inspects a surface condition of a roller 10 in contact with a material sheet 20, wherein an outer circumferential surface 11 of the roller 10 includes a contact surface 11a that contacts the material sheet 20 along the longitudinal direction L of the roller 10 and a non-contact surface 11b that does not contact the material sheet 20, wherein the roller surface inspection method includes a measurement step of measuring the gaps between the contact surface 11a and the non-contact surface 11b and the measurement sensor 110 by the measurement sensor 110. Additionally, the roller surface inspection method according to an embodiment of the present disclosure may further include a determination step and an amplification step.

A roller surface inspection method according to an embodiment of the present disclosure relates to a roller surface inspection method applied to a roller surface inspection device 100 according to the above-described embodiment. Therefore, in the present embodiment, the contents overlapping with the above-described embodiment will be omitted or briefly described, and the differences will be mainly described.

More specifically, the roller surface inspection method according to an embodiment of the present disclosure is a roller surface inspection method that inspects the surface condition of the roller 10 in contact with the material sheet 20.

The material sheet 20 may be configured as a sheet-shaped electrode.

The roller 10 may extend in the longitudinal direction L in a cylindrical shape. Here, the outer circumferential surface 11 of the roller 10 may be made of a metal material. At this time, the roller 10 may be configured as a calendar roll.

Additionally, the outer circumferential surface 11 of the roller 10 includes a contact surface 11a that contacts the material sheet 20 along the longitudinal direction L of the roller 10 and a non-contact surface 11b that does not contact the material sheet 20.

Here, the contact surfaces 11a may be positioned on both sides of the roller 10 with respect to the longitudinal direction L of the roller 10, and the non-contact surface 11b may be positioned between the plurality of contact surfaces 11a positioned on both sides of the roller 10.

In the measurement step, each of the gaps between the measurement sensor 110 and the contact surface 11a and the non-contact surface 11b on the outer circumferential surface 11 of the roller 10 may be measured by the measurement sensor 110.

And, in the measurement step, wear conditions of the contact surface 11a and the non-contact surface 11b may be detected by measuring the gaps d1, d2, d3 between the measurement sensor 110 and the outer circumferential surface 11 of the roller 10 by the measurement sensor 110.

Additionally, in the measurement step, the measured values of the contact surface 11a and the non-contact surface 11b of the roller 10 measured by the measurement sensor 110 including the capacitive sensor may be transmitted to the determination unit 130. Here, in the measurement step, for example, a capacitance signal, which is the measured value of the contact surface 11a and the non-contact surface 11b of the roller 10 measured by the measurement sensor 110, may be transmitted to the determination unit 130.

The capacitive sensor may include a non-contact surface sensor 111 that measures the capacitance of the non-contact surface 11b and a contact surface sensor 112 that measures the capacitance of the contact surface 11a. For example, when an alternating current of a certain frequency flows toward a conductive measurement target in the capacitive sensor, the amplitude of the alternating current voltage is proportional to the distance from the measurement target, and thus the distance between the capacitive sensor and the measurement target may be measured.

The non-contact surface sensors 111 may be provided in plurality to sense the non-contact surfaces 11b positioned on both sides of the roller 10, respectively.

In addition, in the measurement step, the contact surface sensors 112 may be positioned in plurality along the longitudinal direction L of the roller 10 to measure the diameter of the roller 10 at a plurality of portions on the contact surface 11a.

The contact surface sensor 112 may include a first contact surface sensor 112a that measures the capacitance of edge portions of the contact surface 11a with which the material sheet 20 is in contact with respect to the longitudinal direction L of the roller 10 and a second contact surface sensor 112b that measures the capacitance of a central portion of the contact surface 11a with which the material sheet 20 is in contact with respect to the longitudinal direction L of the roller 10.

The first contact surface sensor 112a may be provided in plurality to sense the edge portions of both sides of the contact surface 11a, respectively. And, the second contact surface sensor 112b may be positioned between the plurality of first contact surface sensors 112a.

Meanwhile, the measurement step may include an initial setting process in which, before the operation of the equipment including the roller 10, the gaps d1, d2, d3 between the ends 111a, 112a-1, 112b-1 of the non-contact surface sensor 111 and the contact surface sensor 112 and the outer circumferential surface 11 of the roller 10 are measured, and the ends 111a, 112a-1, 112b-1 of the non-contact surface sensor 111 and the contact surface sensor 112 are positioned so as to have a constant initial gap value with the outer circumferential surface 11 of the roller 10. At this time, the initial setting process may set the ends 111a, 112a-1, 112b-1 of the non-contact surface sensor 111 and the contact surface sensor 112 have a gap value of, for example, about 600 um with the outer circumferential surface 11 of the roller 10.

Additionally, the measurement step may further include a post-measurement process in which, after the operation of the equipment including the roller 10, the gaps d1, d2, d3 between the non-contact surface sensor 111 and the contact surface sensor 112 and the outer circumferential surface 11 of the roller 10 are measured to extract the measured gap value.

Here, in the post-measurement process, the gaps d1, d2, d3 between the non-contact surface sensor 111 and the contact surface sensor 112 and the outer circumferential surface 11 of the roller 10 may be measured by the non-contact surface sensor 111 and the contact surface sensor 112 while rotating the roller 10 during measurement after the operation of the equipment.

At this time, as an example, the measured gap value measured while rotating the roller 10 in the determination step may be determined by using the average value. That is, the determination unit 130 may use the average value of the gap values transmitted from the measurement sensor 110 as the measured gap value. Accordingly, it may be possible to detect changes in the diameters of the contact surface 11a and the non-contact surface 11b of the roller 10 in the determination step. That is, in the determination step, it may be easy to determine whether the contact surface 11a and the non-contact surface 11b of the roller 10 are worn out and thus reduced in diameter.

Meanwhile, as another example, the measured gap value measured while rotating the roller 10 in the determination step may be determined by using a value that is equal to or greater than a predetermined range. That is, in the determination step, a value that is equal to or greater than a predetermined range in the gap values transmitted from the measurement sensor 110 may be used as the measured gap value. Accordingly, it is possible to easily detect that some parts of the contact surface 11a and the non-contact surface 11b of the roller 10 are damaged to form a groove or the like in the determination step.

The determination step may receive the measured values of the contact surface 11a and the non-contact surface 11b of the roller 10 measured through the measurement step and may determine that the condition of the roller 10 needs to be checked and the roller 10 needs to be replaced by the determination unit 130.

Additionally, the determination step may determine that the condition of the roller 10 needs to be checked when the difference between the measured value of the contact surface 11a and the measured value of the non-contact surface 11b is equal to or greater than a certain value. At this time, the determination step may determine that the condition of the roller 10 needs to be checked when the difference between the measured value of the contact surface 11a and the measured value of the non-contact surface 11b is equal to or greater than, for example, 2%.

Here, the determination step may determine that the condition of the roller 10 needs to be checked, for example, when the amplitude difference between the capacitance signal waveform of the contact surface 11a and the capacitance signal waveform of the non-contact surface 11b is equal to or greater than a certain value. At this time, the determination step may determine that the condition of the roller 10 needs to be checked when the amplitude difference between the capacitance signal waveform of the contact surface 11a and the capacitance signal waveform of the non-contact surface 11b is equal to or greater than, for example, 2%.

In addition, by comparing the initial gap value measured before the operation of the equipment during the initial setting process with the measured gap value measured after the operation of the equipment during the post-measurement process, the determination step may determine that the roller 10 needs to be replaced if the difference in the gap value is equal to or greater than a certain range. At this time, by comparing the initial gap value measured before the operation of the equipment with the measured gap value measured after the operation of the equipment by the non-contact surface sensor 111 and the contact surface sensor 112, the determination step may determine that the roller 10 needs to be replaced if the difference is equal to or greater than, for example, 3%.

In the amplification step, the amplification unit 120 may be connected to the measurement sensor 110 to amplify the measured values of the contact surface 11a and the non-contact surface 11b and transmit them to the determination unit 130.

At this time, in the amplification step, for example, the capacitance signal of the contact surface 11a and the capacitance signal of the non-contact surface 11b may be amplified through the amplification unit 120 connected to the measurement sensor 110 and may be transmitted to the determination unit 130.

Accordingly, by amplifying the measured values of the contact surface 11a and the non-contact surface 11b through the amplification unit 120 in the amplification step, the condition of the roller 10 may be determined more accurately in the determination step.

The present disclosure has been hereinabove described in detail through specific embodiments, but this is intended to specifically describe the present disclosure, and the present disclosure is not limited thereto. It will be said that various modifications and variations are possible by those having ordinary skill in the art within the technical ideas of the present disclosure.

Additionally, the specific scope of protection of the present disclosure will be made clear by the appended claims of the patent.

### [List of Reference Numerals]

10: Roller
11: Outer circumferential surface
11a: Contact surface
1 lb: Non-contact surface
12: Rotating shaft
20: Material sheet
100: Roller surface inspection device
110: Measurement sensor
111: Non-contact surface sensor
111a, 112a-1, 112b-1: End
112: Contact surface sensor
112a: First contact surface sensor
112b: Second contact surface sensor
120: Amplification unit
130: Determination unit
L: Longitudinal direction

## Claims

1. A roller surface inspection device for inspecting a surface condition of a roller in contact with a material sheet,
wherein an outer circumferential surface of the roller comprises a contact surface that contacts the material sheet along the longitudinal direction of the roller and a non-contact surface that does not contact the material sheet,
wherein the roller surface inspection device comprises a measurement sensor that measures gaps between the contact surface and the non-contact surface and the measurement sensor.

2. The roller surface inspection device according to claim 1,
wherein the measurement sensor measures the gaps between the contact surface and the non-contact surface and the measurement sensor to detect wear conditions of the contact surface and the non-contact surface.

3. The roller surface inspection device according to claim 1, further comprising:
a determination unit receiving the measured values of the contact surface and the non-contact surface of the roller measured by the measurement sensor and determining that the condition of the roller needs to be checked and the roller needs to be replaced.

4. The roller surface inspection device according to claim 3,
wherein the determination unit determines that the condition of the roller needs to be checked when the difference between the measured value of the contact surface and the measured value of the non-contact surface is equal to or greater than a certain value.

5. The roller surface inspection device according to claim 3,
wherein the measurement sensor comprises a capacitive sensor.

6. The roller surface inspection device according to claim 5, further comprising:
an amplification unit connected to the measurement sensor to amplify the measured values of the contact surface and the non-contact surface and transmit them to the determination unit.

7. The roller surface inspection device according to claims 5 or 6,
wherein the measurement sensor measures the gaps between the contact surface and the non-contact surface and the end of the measurement sensor when the roller rotates, and
the determination unit determines that the condition of the roller needs to be checked when the difference between the measured value of the contact surface and the measured value of the non-contact surface is equal to or greater than a certain value.

8. The roller surface inspection device according to claim 5,
wherein the capacity sensor comprises:
a non-contact surface sensor that measures the capacitance of the non-contact surface; and
a contact surface sensor that measures the capacitance of the contact surface,
wherein the contact surface sensors are provided in plurality along the longitudinal direction of the roller to measure the diameter of the roller at a plurality of portions on the contact surface.

9. The roller surface inspection device according to claim 8,
wherein the non-contact surface sensor and the contact surface sensor transmit:
before the operation of the equipment comprising the roller, an initial gap value obtained by measuring the gaps between the non-contact surface sensor and the contact surface sensor and the outer circumferential surface of the roller to the determination unit, and
after the operation of the equipment comprising the roller, a measured gap value obtained by measuring the gaps between the non-contact surface sensor and the contact surface sensor and the outer circumferential surface of the roller to the determination unit,
wherein the determination unit compares the initial gap value with the measured gap value, and determines that the roller needs to be replaced if the difference is equal to or greater than a certain range.

10. The roller surface inspection device according to claim 8,
wherein the contact surface sensor comprises:
a first contact surface sensor that measures the capacitance of edge portions of the contact surface with which the material sheet is in contact with respect to the longitudinal direction of the roller; and
a second contact surface sensor that measures the capacitance of a central portion of the contact surface with which the material sheet is in contact with respect to the longitudinal direction of the roller.

11. The roller surface inspection device according to claim 1,
wherein the outer circumferential surface of the roller is made of a metal material, and
the material sheet is composed of a sheet-shaped electrode.

12. A roller surface inspection method for inspecting a surface condition of a roller in contact with a material sheet,
wherein an outer circumferential surface of the roller comprises a contact surface that contacts the material sheet along the longitudinal direction of the roller and a non-contact surface that does not contact the material sheet,
wherein the roller surface inspection method comprises a measurement step of measuring the gaps between the contact surface and the non-contact surface and the measurement sensor by a measurement sensor.

13. The roller surface inspection method according to claim 12,
wherein in the measurement step,
gaps between the measurement sensor and the contact surface and the non-contact surface are measured by the measurement sensor to detect wear conditions of the contact surface and the non-contact surface.

14. The roller surface inspection method according to claim 12, further comprising:
a determination step of receiving the measured values of the contact surface and the non-contact surface of the roller measured through the measurement step and determining that the condition of the roller needs to be checked and the roller needs to be replaced by a determination unit.

15. The roller surface inspection method according to claim 14,
wherein the determination step determines that the condition of the roller needs to be checked when the difference between the measured value of the contact surface and the measured value of the non-contact surface is equal to or greater than a certain value.

16. The roller surface inspection method according to claim 14,
wherein in the measurement step,
the measured values of the contact surface and the non-contact surface of the roller measured by the measurement sensor comprising a capacitive sensor are transmitted to the determination unit.

17. The roller surface inspection method according to claim 16, further comprising:
an amplification step of amplifying the measured value of the contact surface and the measured value of the non-contact surface through an amplification unit connected to the measurement sensor and transmitting them to the determination unit.

18. The roller surface inspection method according to claims 16 or 17,
wherein the measurement step measures the gaps between the contact surface and the non-contact surface and the end of the measurement sensor when the roller rotates, and
the determination step determines that the condition of the roller needs to be checked when the difference between the measured value of the contact surface and the measured value of the non-contact surface is equal to or greater than a certain value.

19. The roller surface inspection method according to claim 16,
wherein the capacity sensor comprises a non-contact surface sensor that measures the capacitance of the non-contact surface; and a contact surface sensor that measures the capacitance of the contact surface,
wherein in the measurement step, the contact surface sensors are positioned in plurality along the longitudinal direction of the roller to measure the diameter of the roller at a plurality of portions on the contact surface.

20. The roller surface inspection method according to claim 19,
wherein the measurement step comprises:
an initial setting process in which, before the operation of the equipment comprising the roller, gaps between the ends of the non-contact surface sensor and the contact surface sensor and the outer circumferential surface of the roller are measured, and the ends of the non-contact surface sensor and the contact surface sensor are positioned to have a constant initial gap value with the outer circumferential surface of the roller.

21. The roller surface inspection method according to claim 20,
wherein the measurement step further comprises:
a post-measurement process in which, after the operation of the equipment comprising the roller, the gaps between the non-contact surface sensor and the contact surface sensor and the outer circumferential surface of the roller are measured to extract the measured gap value,
wherein the determination step compares the initial gap value with the measured gap value, and determines that the roller needs to be replaced if the difference in the gap value is equal to or greater than a certain range.
